# EUROPÄISCHE PATENTANMELDUNG

(11) **EP 1 338 448 A1**
(43) Veröffentlichungstag der Anmeldung: **27.08.2003**
(21) Anmeldenummer: 03000956.7
(22) Anmeldetag: 16.01.2003
(51) Int. Cl.: B60H 1/00

(54) **Doppelmischraumkonzept mit variablen Schichtungsmöglichkeiten**

(30) Priorität: 26.02.2002 DE 10208141
(71) Anmelder: Valeo Klimasysteme GmbH, 96476 Rodach (DE)
(72) Erfinder: Derx, Siegfried, 96215 Lichtenfels (DE)
(74) Vertreter: Hofmann, Harald

(57) **Zusammenfassung**

Heiz-, Belüftungs- und/oder Klimaanlage eines Kraftfahrzeugs mit einem Wärmetauscher 2, mit wenigstens einem seitlich an dem Wärmetauscher 2 vorbei geführten Kaltluftkanal 8, 9, einem Luftstromsteuermittel und zumindest einem Luftmischraumbereich 22, 23, der mehrere Austrittsöffnungen 24, 25 aufweist, die zu unterschiedlichen Ausströmem im Fahrzeuginnenraum führen, wobei wenigstens ein Luftstromsteuermittel in Strömungsrichtung dem Wärmetauscher vorgeschaltet ist, um die Beaufschlagung mit Kaltluft reduzieren zu können, und dass seitlich des Wärmetauschers 2 zumindest eine Luftleiteinrichtung vorgesehen ist, die eine vertikal verlaufende Komponente in die den Wärmetauscher 2 umgehende Luftströmung einbringt.

## Beschreibung

Die Erfindung betrifft eine Heiz-, Belüftungs- und/oder Klimaanlage eines Kraftfahrzeugs mit einem Wärmetauscher, mit wenigstens einem seitlich an dem Wärmetauscher vorbeigeführten Kaltluftkanal, einem Luftstromsteuermittel und zumindest einem Luftmischraumbereich, der mehrere Austrittsöffnungen aufweist, die zu unterschiedlichen Ausströmern im Fahrzeuginnenraum führen.

Im Stand der Technik sind Klimaanlagen mit seitlich an dem Wärmetauscher vorbeigeführten Kaltluftkanälen aus dem Offenbarungsgehalt der DE 44 22 120 bekannt. In dieser werden Klimaanlagen beschrieben, in der Luftstromsteuermittel, wie beispielsweise Luftklappen, dem Wärmetauscher strömungstechnisch nachgeschaltet sind. Luftstromsteuermittel sind dabei in einem Luftmischraumbereich bzw. bei entsprechender Ausgestaltung in zwei Luftmischraumbereichen angeordnet.

Es hat sich nunmehr herausgestellt, dass die oben genannte Ausgestaltung einer Heiz-, Belüftungs- und/oder Klimaanlage mehrere nachteilige Wirkungen aufweist. Bei der Anordnung von Luftstromsteuermittel, insbesondere von Luftklappen im Mischraum, ist es von Nachteil, dass dadurch keine zufriedenstellende Vermengung der einzelnen Kalt- und Warmluftkomponenten erreicht wird, so dass sich eine inhomogene Temperaturverteilung ausbildet. Weiterhin kann mit oben genannter Anordnung nur eine unzufriedene Temperaturschichtung realisiert werden, diese ist dann notwendig, wenn unterschiedliche Luftaustrittsöffnungen mit verschieden Temperaturen beschickt werden sollen. Darüber hinaus ergibt sich bei eingestellten Temperaturextrema ein hoher Lärmpegel, aufgrund der hohen Staudrücke und der hohen Strömungswiderstände.

Es ist daher Aufgabe der vorliegenden Erfindung, eine Heiz-, Belüftungs- und/oder Klimaanlage derart weiterzubilden, dass eine bessere Temperaturverteilung bzw. Temperaturschichtung im Mischraum, eine geringere Geräuschentwicklung, insbesondere bei eingestellten Temperaturextrema, ein vorteilhafteres Abströmen der Mischluft aus dem Mischraum, insbesondere in den Fußraumbereich und ein niedrigere Erwärmung des am Wärmetauscher vorbeigeleiteten Kaltluftstroms gewährleistet wird.

Diese Aufgabe wird durch die Merkmale des unabhängigen Patentanspruchs 1 gelöst, wobei zweckmäßige Weiterbildungen durch die Merkmale der abhängigen Ansprüche beschrieben sind.

Insbesondere schlägt die vorliegende Erfindung eine Heiz-, Belüftungs- und/oder Klimaanlage eines Kraftfahrzeugs, mit wenigstens einem seitlich an dem Wärmetauscher vorbeigeführten Kaltluftkanal, einem Luftstromsteuermittel und zumindest einem Luftmischraumbereich, der mehrere Austrittsöffnungen aufweist vor, wobei die Anlage erfindungsgemäß dadurch gekennzeichnet ist, dass wenigstens ein Luftstromsteuermittel in Strömungsrichtung dem Wärmetauscher vorgeschaltet ist, um die Beaufschlagung mit Kaltluft reduzieren zu können, und dass seitlich des Wärmetauschers zumindest eine Luftleiteinrichtung vorgesehen ist, die eine vertikal verlaufende Komponente in die den Wärmetauscher umgehende Luftströmung einbringt. Durch die vorgeschalteten Luftstromsteuermittel ergibt sich eine einfache Möglichkeit, den Wärmetauscher vom Luftstrom in der Weise abzuschirmen, dass der am Wärmetauscher vorbeigeleitete Luftstrom nicht mit diesem in Kontakt kommt und dadurch der Kaltluftstrom unerwünscht erwärmt würde. Durch die Einführung einer vertikalen Luftstromkomponente wird einerseits eine bessere Verwirblung der Luftströme im Luftmischraum erreicht und damit eine homogenere Temperaturverteilung, andererseits kann dadurch ein Teil des Luftstroms separiert und zu einer gewünschten Luftaustrittsöffnung gezielt umgeleitet werden. Als besonders vorteilhaft hat sich herausgestellt, dass bei der Einführung einer vertikalen Komponente in den Luftstrom, dieser wesentlich direkter an eine Luftaustrittsöffnung herangerührt werden kann. Dadurch wird das Risiko einer Hinterströmung des Wärmetauschers und eine dadurch verbundene unerwünschte Erwärmung des Kaltluftstroms verringert.

Weiterhin ist es von Vorteil, dass die Luftleiteinrichtung zumindest eine Luftaustrittsöffnung, insbesondere bezüglich des Kaltluftstroms abschirmt. Es besteht der Bedarf an manchen Luftaustrittsöffnungen ein höheres Temperaturniveau einstellen zu können. Durch eine Abschirmung einer Austrittsöffnung vom Kaltluftstrom gelangt im wesentlichen nur noch der Luftstrom, der den Wärmetauscher passiert hat zur Austrittsöffnung, dieser wird also nicht mehr durch den Kaltluftstrom abgekühlt, wobei die verbleibenden Luftaustrittöffnungen weiterhin mit dem Kaltluftstrom oder mit Mischluft versorgt werden können.

In einer bevorzugten Ausführungsform ist die Abgeschirmte Luftaustrittsöffnung eine Luftaustrittsöffnung, die zur Beschickung des Fußraumes und/oder der Defrostaustrittsöffnung bestimmt ist. An diesen Luftaustrittsöffnungen soll erfahrungsgemäß ein höheres Temperaturniveau einstellbar sein.

In einer weiteren bevorzugten Ausführungsform umfaßt die Luftleiteinrichtung eine Rampe, die in Strömungsrichtung ansteigt. Durch eine Rampe kann auf einfache konstruktive Weise der Luftstrom umgeleitet, oder mit einer Vertikalkomponente bereitgestellt werden.

Ferner ist es von Vorteil, dass wenigstens ein Luftleiteinrichtungsbypasskanal vorgesehen ist. Dadurch besteht die Möglichkeit, die Abschirmung einer Luftaustrittsöffnung durch eine Rampe bei Bedarf umgehen zu können. Dieser Luftleiteinrichtungsbypasskanal kann insbesondere offen, innerhalb des Luftführungsgehäuses angeordnet werden.

Vorteilhafterweise ist der Luftleiteinrichtungsbypasskanal durch ein Luftstromsteuermittel, insbesondere durch eine Luftklappe, steuerbar. Dadurch ergibt sich eine einfache Möglichkeit, die Kaltluftmenge, die den Luftleiteinrichtungsbypasskanal durchströmt regulieren zu können, somit kann auch bei der abgeschirmten Luftaustrittsöffnung ein gewünschtes Temperaturniveau auf einfache Weise eingestellt werden. Es hat sich als vorteilhaft herausgestellt die Luftklappe vertikal im Luftleiteinrichtungsbypasskanal anzuordnen. Eine weitere Möglichkeit wäre, die Luftklappe horizontal im Luftleiteinrichtungsbypasskanal oder in der gleichen Ebene der Rampe anzuordnen, so dass die stirnseitige Fläche der Luftklappe mit der Oberfläche der Rampe formschlüssig abschließt.

Weiterhin ist es von Vorteil, dass die Luftstromsteuermittel eine Einrichtung, die dem Kaltluftstrom zugeordnet ist und Eine, die dem Wärmetauscher zugeordnet ist umfaßt, wobei die dem Wärmetauscher zugeordnete Einrichtung, diesem im wesentlichen vorgeschaltet ist und die dem Kaltluftstrom zugeordnete im wesentlichen parallel zu diesem geschaltet ist. Durch das Vorschalten der Luftstromsteuermittel, insbesondere von Luftklappen, vor dem Wärmetauscher kann dessen Stirnfläche vom Kaltluftstrom in der Weise abgeschirmt werden, dass die Kaltluft möglichst geringen Kontakt zum Wärmetauscher hat. Dadurch wird der sog. "Heat Pick Up" minimiert, d.h. die unerwünschte Erwärmung des Luftstroms vor dem Wärmetauscher wird minimiert.

Vorteilhafterweise sind die Einrichtungen der Luftstromsteuermittel mechanisch gekoppelt, insbesondere mittels entsprechender Hebelanordnungen, wobei wenigstens an einer der Einrichtungen ein Betätigungselement zur Ansteuerung der Luftstromsteuermittel vorgesehen ist. Um definierte Temperaturen in dem oder den Luftmischraumbereichen einstellen zu können, müssen die Luftstromsteuermittel vor dem Wärmetauscher und die Luftstromsteuermittel, die dem Kaltluftkanal zugeordnet sind, eine der Temperatur zugeordnete Menge an Kaltluft und Warmluft in den Luftmischraumbereich passieren lassen. Durch die Kopplung der korrespondierenden Luftstromsteuermittel kann eine entsprechende Regelung auf einfache Weise realisiert werden. Beispielsweise hat eine Erhöhung der Solltemperatur zur Folge, dass die Menge an Luft, die durch den Kaltluftkanal geleitet verringert wird und durch die mechanische Kopplung die Menge an Luft, die den Wärmetauscher passiert erhöht wird, so dass sich in den entsprechenden Luftmischraumbereichen eine der Solltemperatur im wesentlichen entsprechende Mischtemperatur einstellt.

In einer bevorzugten Ausführungsform ist zumindest eine Einrichtung des Luftstromsteuermittels mit der Luftklappe des Luftleiteinrichtungsbypasskanals, insbesondere mittels einer Hebelanordnung, gekoppelt. Dadurch ergibt sich eine einfache Möglichkeit, die Luftklappe im Luftleiteinrichtungsbypasskanal in den Regelkreislauf mit einzubeziehen.

In einer weiteren bevorzugten Ausführungsform umfaßt die Heiz-, Belüftungs- und/oder Klimaanlage zwei Luftmischraumbereiche mit einer im wesentlichen beidseitigen symmetrischen Anordnung der Luftstromsteuermittel und der Luftleiteinrichtungen. Dadurch stehen unabhängige Temperaturbereiche zur Verfügung. Mit diesen können die dem Beifahrer und die dem Fahrer zugeordneten Luftaustrittsöffnungen mit unterschiedlichen Temperaturen beschickt werden.

Weitere Merkmale und Vorteile der Erfindung werden deutlicher beim Lesen der folgenden, lediglich beispielhaften und nicht einschränkend angeführten Beschreibung, welcher unter Bezugnahme auf die beiliegende Zeichnung erfolgt. Darin zeigt:

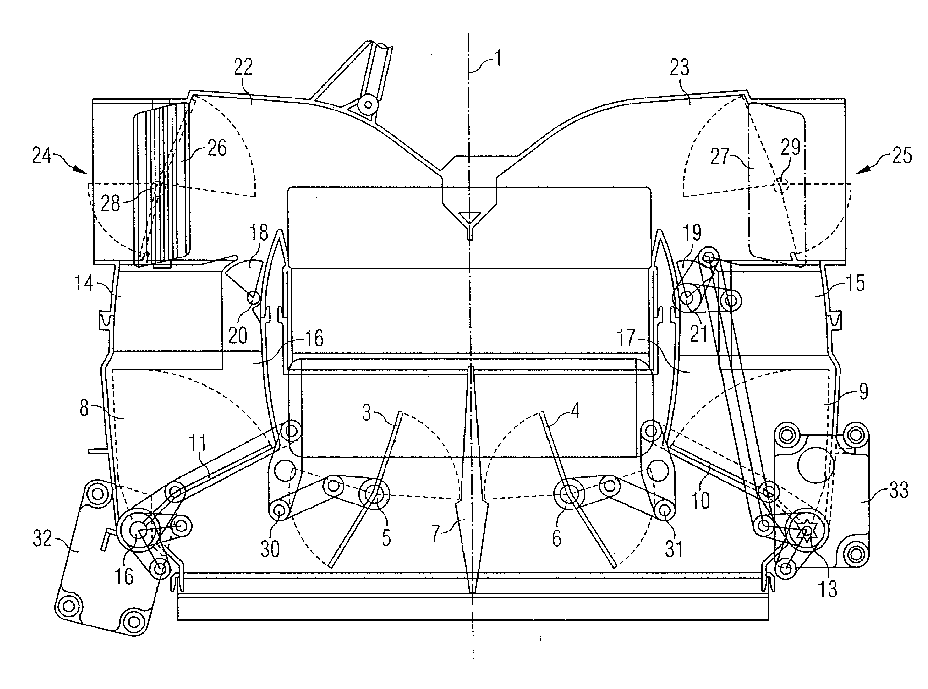

- Figur 1: eine Aufsicht auf einen Bereich einer derzeit bevorzugten Ausführungsform einer erfindungsgemäßen Anlage.

Figur 1 zeigt einen Bereich einer bevorzugten Ausführungsform einer erfindungsgemäßen Anlage. Die Anlage ist bezüglich einer Symmetrielinie 1 im wesentlichen achsensymmetrisch. Ausgehend von einem in Figur 1 nicht dargestellten Gebläse ist, zumindest bei Klimaanlagen, stromabwärts ein ebenfalls nicht dargestellter Verdampfer angeordnet. In Strömungsrichtung gesehen hinter dem Verdampfer ist ein Wärmetauscher 2, mit davor angeordneten Luftklappen 3 und Luftklappe 4 vorgesehen.

Die Luftklappen 3, 4 sind, drehbar um eine jeweilig Lagerachse 5, 6 gelagert. Zwischen den beabstandeten Luftklappen 3, 4 erstreckt sich in Strömungsrichtung ein Luftleitelement 7, das in der Draufsicht betrachtet einen im wesentlichen keilförmigen Querschnitt aufweist, der sich stromabwärts verdickt. Die Luftklappen 3, 4 sind von einer im wesentlichen parallelen Stellung zum Luftstrom bis zu einer orthogonalen Stellung stufenlos drehbar. Stirnseitig betrachtet weisen die Luftklappen 3, 4 einen im wesentlichen rechteckigen Querschnitt auf, wobei die Oberflächen der Luftklappen 3, 4 in der Weise geformt sind, dass möglichst geringe Strömungswiderstände auftreten. In der orthogonalen Stellung der Luftklappen 3, 4 schirmen diese die stirnseitige Eintrittsöffnungen des Wärmetauschers 2 gegen den Luftstrom ab.

Seitlich vom Wärmetauscher 2 ist jeweils ein Kaltluftkanal 8 und auf der gegenüberliegenden Seite des Wärmetauschers 2 ein Kaltluftkanal 9 angeordnet. In den Eintrittsbereichen der Kaltluftkanäle 8, 9 ist jeweils eine Luftklappe 10, 11 angeordnet. Die Luftklappen 10, 11 sind drehbar über eine jeweilige Lagerachse 12, 13 zwischen einer offenen Position und einer geschlossenen Position stufenlos drehbar gelagert. Die Luftklappen 10, 11 weisen stirnseitig betrachtet einen im wesentlichen rechteckigen Querschnitt auf, der den stirnseitigen Querschnitten der Kaltluftkanäle 8, 9 so angepaßt ist, dass diese die Kaltluftkanäle 8, 9 in geschlossener Position gegen den Kaltluftstrom abschirmen können.

In Strömungsrichtung hinter den Luftklappen 10, 11 sind jeweils im Erstreckungsbereich der Kaltluftkanäle 8, 9 Luftleiteinrichtungen in Form von Rampen 14, 15 angeordnet. Die Rampen 14, 15 weisen in der Draufsicht jeweils einen im wesentlichen rechteckigen Querschnitt auf. In Strömungsrichtung abwärts steigt die Höhe der Rampen 14, 15 bei der hier gezeigten Ausführungsform linear an. Obwohl nicht dargestellt auch andere Formen wie insbesondere eine parabel-, eine logarithmische spiral- oder eine kreisbogenform in weiteren Ausführungsformen zur Anwendung kommen können. Zwischen den Rampen 14, 15 und dem Wärmetauscher 2 ist jeweils ein Luftleiteinrichtungsbypasskanal 16, 17 ausgebildet, in deren Erstrekkungsbereichen jeweils eine weitere Luftklappe 18, 19 angeordnet ist. Die Luftklappen 18, 19 weisen jeweils eine Lagerachse 20, 21 auf, um diese zwischen einer geschlossenen Position und einer offenen Position z.B. stufenlos drehbar gelagert sind. In der geschlossenen Position der Luftklappen 18, 19 schirmen diese die Luftleiteinrichtungsbypasskanäle 16, 17 bezüglich des Kaltluftstroms ab, so dass praktisch der gesamte Kaltluftstrom über die Rampen 14, 15 verläuft und zu einer darüber liegenden nicht dargestellten Luftaustrittsöffnung abgelenkt werden.

Der erste Kaltluftkanal 8 mündet in einem ersten Luftmischraumbereich 22, der zweite Kaltluftkanal 9 in einem zweiten Luftmischraumbereich 23. Ausgehend von den Luftmischraumbereichen 22, 23 erstrecken sich mehrere Luftaustrittsöffnungen in einen Fahrzeuginnenraum, wobei jeweils ein Luftmischraumbereich 22, 23 entweder dem Beifahrer oder dem Fahrer zugeordnet ist. In Figur 1 ist beispielhaft eine erste Luftaustrittsöffnung 24 und eine zweite Luftaustrittsöffnung 25, die den entsprechenden Luftmischraumbereichen 22, 23 zugeordnet sind, dargestellt. Den Luftaustrittsöffnungen 24, 25 ist jeweils eine Luftklappe 26, 27 vorgeschaltet. Die Luftklappen 26, 27 sind an einer jeweiligen Lagerachse 28, 29 drehbar gelagert und zwischen einer offenen Position und einer geschlossenen Position stufenlos einstellbar. In der geschlossenen Position schirmen diese die Luftaustrittsöffnungen 24, 25 gegen den Luftstrom im wesentlichen vollständig ab. Die in Figur 1 dargestellten Luftaustrittsöffnungen 24, 25 sind den jeweiligen Fußraumbereichen von Beifahrer und Fahrer zugeordnet. In Figur 1 nicht dargestellt, ist eine Defrosteraustrittsöffnung, die üblicherweise über dem Wärmetauscher 2 angeordnet ist und die sog. Mananströmer, die üblicherweise stirnseitig gegenüber des Wärmetauschers 2 an den Luftmischraumbereichen 22, 23 angeordnet sind.

In der in Figur 1 gezeigten derzeit bevorzugten Ausführungsform sind die dem Wärmetauscher 2 in Strömungsrichtung vorgeschalteten Luftklappen 3, 4, die den Kaltluftkanälen 8, 9 vorgeschalteten Luftklappen 10, 11 und die in den Luftleiteinrichtungsbypasskanälen 16, 17 angeordneten Luftklappen 18, 19 jeweils mittels einer Hebelanordnung 30, 31 miteinander verbunden. Die Hebelanordnungen 30, 31 sind an den jeweiligen Lagerachsen 5, 6, 12, 13, 20, 21 oberhalb und unterhalb der Luftklappen 3, 4, 10, 11, 18, 19 angeordnet. An die den Kaltluftkanälen 8, 9 vorgeschalteten Luftklappen 10, 11 ist jeweils ein Stellmotor 32, 33 mit den Lagerachsen 12, 13 verbunden. Durch eine entsprechende Ansteuerung der Luftklappen 10, 11 mittels der Stellmotoren 32, 33 wird der Luftstrom vor dem Wärmetauscher 2 in einen Anteil, der den Wärmetauscher 2 durchströmt und in einen Anteil, der durch die Kaltluftkanäle 8, 9 bzw. durch die Luftleiteinrichtungsbypasskanäle 16, 17 geleitet wird aufgeteilt. Durch die Aufteilung des Luftstroms, stellt sich in den Luftmischraumbereichen 22, 23 eine definierte Mischtemperatur, die durch die Luftaustrittsöffnungen 24, 25 in den Fahrzeuginnenraum gelangt, ein.

Um das erfindungsgemäße Konzept zu verdeutlichen wird beispielhaft ein bevorzugter Modus beschrieben. In diesem sollen die Mananströmer mit kalter Luft, der Defrosteraustritt und die Fußraumbereiche mit warmer Luft beschickt werden. Mittels der Stellmotoren 32, 33 werden die Luftklappen 3, 4, 10, 11 in geöffnete Position und die Luftklappen 18, 19 der Luftleiteinrichtungsbypasskanäle 16, 17, in geschlossene Position verfahren. Die Anteile des Luftstroms, die jeweils in die Kaltluftkanäle 8, 9 gelangen, werden durch die Rampen 14, 15 in vertikale Richtung abgelenkt, so dass diese bevorzugt die Mananströmer beschicken. Der Anteil des Luftstroms, der den Wärmetauscher 2 durchströmt gelangt über die Luftmischraumbereiche 22, 23 an die Austrittsöffnungen 24, 25, die den jeweiligen Fußräumen von Beifahrer und Fahrer zugeordnet sind, und an den über dem Wärmetauscher 2 liegenden Defrosteraustritt, ohne dabei wesentlich vom Kaltluftstrom abgekühlt zu werden. Bei Bedarf können die jeweiligen Luftklappen 18, 19, die den Luftleiteinrichtungsbypasskanälen 16, 17 zugeordnet sind, geöffnet werden, so dass bevorzugt die Luftaustrittsöffhungen 24, 25 mit Kaltluftbeimischung beschickt werden, dabei wird die Temperatur der Mischluft, die den Defrosteraustritt beschickt, praktisch nicht beeinträchtigt, da dieser üblicherweise oberhalb des Wärmetauschers 2 angeordnet ist. In dieser beispielhaft gezeigten Stellung der Luftklappen 3, 4, 10, 11, 18, 19 werden die Mananströmer, die Defrostaustritte und die Fußräume mit jeweils unterschiedlich temperierter Mischluft beschickt.

Obwohl die vorliegende Erfindung vorangehend unter Bezugnahme auf eine derzeit bevorzugte Ausführungsform vollständig beschrieben wurden, sollte der Fachmann erkennen, dass verschiedene Veränderungsmöglichkeiten im Rahmen der beiliegenden Ansprüche möglich sind, ohne von dem erfindungsgemäßen Konzept und dem beanspruchten Schutz abzuweichen. Insbesondere ist eine Regelung der Luftklappen mittels eines Federelementes oder eine Selbstregelung mittels der anliegenden Staudrücke naheliegend.

### Bezugszeichenliste

- 1: Symmetrielinie
- 2: Wärmetauscher
- 3: Luftklappe
- 4: Luftklappe
- 5: Lagerachse
- 6: Lagerachse
- 7: Luftleitelement
- 8: Kaltluftkanal
- 9: Kaltluftkanal
- 10: Luftklappe
- 11: Luftklappe
- 12: Lagerachse
- 13: Lagerachse
- 14: Rampe
- 15: Rampe
- 16: Luftleiteinrichtungsbypasskanal
- 17: Luftleiteinrichtungsbypasskanal
- 18: Luftklappe
- 19: Luftklappe
- 20: Lagerachse
- 21: Lagerachse
- 22: Luftmischraumbereich
- 23: Luftmischraumbereich
- 24: Luftaustrittsöffnung
- 25: Luftaustrittsöffnung
- 26: Luftklappe
- 27: Luftklappe
- 28: Lagerachse
- 29: Lagerachse
- 30: Hebelanordnung
- 31: Hebelanordnung
- 32: Stellmotor
- 33: Stellmotor

## Patentansprüche

1. Heiz-, Belüftungs- und/oder Klimaanlage eines Kraftfahrzeugs mit einem Wärmetauscher (2), mit wenigstens einem seitlich an dem Wärmetauscher (2) vorbeigeführten Kaltluftkanal (8, 9), einem Luftstromsteuermittel und zumindest einem Luftmischraumbereich (22, 23), der mehrere Austrittsöffnungen (24, 25) aufweist, die zu unterschiedlichen Ausströmern im Fahrzeuginnenraum führen, **dadurch gekennzeichnet, dass** wenigstens ein Luftstromsteuermittel (3, 5) in Strömungsrichtung dem Wärmetauscher (2) vorgeschaltet ist, um die Beaufschlagung mit Kaltluft reduzieren zu können, und dass seitlich des Wärmetauschers (2) zumindest eine Luftleiteinrichtung vorgesehen ist, die eine vertikal verlaufende Komponente in die den Wärmetauscher (2) umgehende Luftströmung einbringt.

2. Heiz-, Belüftungs- und/oder Klimaanlage nach Anspruch 1, **dadurch gekennzeichnet, dass** die Luftleiteinrichtung zumindest eine Luftaustrittsöffnung (24, 25), insbesondere bezüglich des Kaltluftstroms abschirmt.

3. Heiz-, Belüftungs- und/oder Klimaanlage nach Anspruch 2, **dadurch gekennzeichnet, dass** die Abgeschirmte Luftaustrittsöffnung (24, 25) eine Luftaustrittsöffnung (24, 25) ist, die zur Beschickung des Fußraumes und/oder der Defrostaustrittsöffnung bestimmt ist.

4. Heiz-, Belüftungs- und/oder Klimaanlage nach einem der Ansprüche 1 bis 3, **dadurch gekennzeichnet, dass** die Luftleiteinrichtung eine Rampe (14, 15) umfaßt, die in Strömungsrichtung ansteigt.

5. Heiz-, Belüftungs- und/oder Klimaanlage nach einem der Ansprüche 1 bis 4, **dadurch gekennzeichnet, dass** wenigstens ein Luftleiteinrichtungsbypasskanal (16, 17) vorgesehen ist.

6. Heiz-, Belüftungs- und/oder Klimaanlage nach einem der Ansprüche 1 bis 5, **dadurch gekennzeichnet, dass** der Luftleiteinrichtungsbypasskanal (16, 17) durch ein Luftstromsteuermittel, insbesondere durch eine Luftklappe (18, 19), steuerbar ist.

7. Heiz-, Belüftungs- und/oder Klimaanlage nach einem der Ansprüche 1 bis 6, **dadurch gekennzeichnet, dass** die Luftstromsteuermittel eine Einrichtung, die dem Kaltluftstrom zugeordnet ist und Eine, die dem Wärmetauscher (2) zugeordnet ist umfaßt, wobei die dem Wärmetauscher (2) zugeordnete Einrichtung, diesem im wesentlichen vorgeschaltet ist und die dem Kaltluftstrom zugeordnete im wesentlichen parallel zu diesem geschaltete ist.

8. Heiz-, Belüftungs- und/oder Klimaanlage nach einem der Ansprüche 1 bis 7, **dadurch gekennzeichnet, dass** die Einrichtungen der Luftstromsteuermittel mechanisch gekoppelt sind, insbesondere mittels entsprechender Hebelanordnungen (30, 31), wobei wenigstens an einer der Einrichtungen ein Betätigungselement (32, 33) zur Ansteuerung der Luftstromsteuermittel vorgesehen ist.

9. Heiz-, Belüftungs- und/oder Klimaanlage nach einem der Ansprüche 6 bis 8, **dadurch gekennzeichnet, dass** zumindest eine Einrichtung des Luftstromsteuermittels mit der Luftklappe (18, 19) des Luftleiteinrichtungsbypasskanals (16, 17), insbesondere mittels einer Hebelanordnung (30, 31), gekoppelt ist.

10. Heiz-, Belüftungs- und/oder Klimaanlage nach einem der Ansprüche 1 bis 9, **dadurch gekennzeichnet, dass** die Anlage zwei Luftmischraumbereiche (22, 23) umfaßt, mit einer im wesentlichen beidseitig symmetrischer Anordnung der Luftstromsteuermittel und der Luftleiteinrichtungen.
